# FASCICULE DE BREVET EUROPEEN

(11) **EP 1 608 436 B1**
(45) Date de publication et mention de la délivrance du brevet: **25.07.2007**
(21) Numéro de dépôt: 04742269.6
(22) Date de dépôt: 17.03.2004
(51) Int. Cl.: A63F 9/00, A01K 97/00

(54) **Dispositif de simulation de pêche au gros**
Vorrichtung zu Simulation von Hochseefischerei
Device for simulation of big-game fishing

(30) Priorité: 17.03.2003 FR 0303453
(43) Date de publication de la demande: 28.12.2005
(73) Titulaire: Biousse (SAS), 26500 Bourg Lès Valence (FR)
(72) Inventeur: BIOUSSE, Patrice, F-26600 La Roche de Glun (FR)
(74) Mandataire: Honoré, Anne-Claire
(86) Numéro de dépôt international: PCT/FR2004/000651
(87) Numéro de publication internationale: WO 2004/082771

(56) Documents cités:
- US-A- 4 637 603
- US-B2- 6 402 617
- PATENT ABSTRACTS OF JAPAN vol. 014, no. 274 (P-1061), 13 juin 1990 (1990-06-13) -& JP 02 079892 A (MATSUSHITA ELECTRIC IND CO LTD), 20 mars 1990 (1990-03-20)
- PATENT ABSTRACTS OF JAPAN vol. 1999, no. 03, 31 mars 1999 (1999-03-31) -& JP 10 314457 A (NAMCO LTD), 2 décembre 1998 (1998-12-02)

## Description

La présente invention concerne un dispositif pour simuler la pêche d'un gros poisson au moyen d'une canne à pêche équipée d'un moulinet permettant de reproduire les mouvements d'un gros poisson et les mouvements du bateau sur lequel le pêcheur opère réalistes pour l'entraînement dudit pêcheur à la pêche au gros et de l'équipage du bateau.

On entend par « pêche au gros » la pêche de gros poissons tels que des thons, des requins, des espadons, des marlins ou similaires qui dépassent habituellement 100 kilos. Ce type de pêche se pratique généralement, compte tenu du poids des poissons, sur un siège dit de combat positionné à l'arrière ou à l'avant d'un bateau à moteur.

Afin de permettre aux pêcheurs novices de s'entraîner à ce sport particulièrement technique et exigent, on a déjà imaginé des dispositifs pour simuler la pêche d'un poisson au moyen d'une canne à pêche équipée d'un moulinet ; c'est le cas, par exemple, du brevet américain US 4,637,603 décrivant un dispositif de simulation de la pêche. Ce dispositif est constitué d'un cadre sur lequel est positionné un siège de combat constitué d'un plateau d'assise monté libre en rotation autour d'un axe vertical s'étendant depuis un socle posé sur le sol, de deux accoudoirs s'étendant verticalement depuis les bords longitudinaux du plateau, de deux reposes pieds légèrement inclinés de haut en bas depuis le bord transversal avant du plateau d'assise, et d'un porte canne constitué d'un tube cylindrique apte à accueillir le manche de la canne à pêche. Un tambour enrouleur sur l'axe duquel est solidarisé l'extrémité de la ligne de pêche de la canne est positionné à l'intérieur du cadre, sous le siège de combat, et apte à être entraîné par un moteur muni de moyens d'embrayage pour faire varier la vitesse d'entraînement du tambour enrouleur afin de tendre la ligne de pêche et simuler la traction d'un poisson. De plus, le dispositif comprend un rail positionné devant le siège de combat, incliné de bas en haut vers l'avant et sur lequel est guidé un chariot muni d'une poulie, la ligne de pêche étant passée dans la poulie puis connectée à l'axe du tambour enrouleur. Ainsi, en ajustant la position du chariot et de la poulie le long du rail, il est possible de simuler les mouvements d'un poisson.

Ce type de dispositif présente l'inconvénient de ne permettre la simulation que des mouvements verticaux d'un poisson dans l'eau. Par ailleurs, ce type de dispositif ne permet pas au skipper de l'équipage du bateau de s'entraîner aux manoeuvres de son bateau en fonction des mouvements du poisson dans l'eau. On entend par « skipper » le pilote du bateau à l'arrière ou à l'avant duquel est positionné le siège de combat. Enfin, le siège de combat de ce type de dispositif étant fixé à un cadre, il ne permet pas à la personne positionnée derrière le siège de combat et communément appelée « driver » de s'entraîner à orienter le siège en fonction des déplacements du poisson.

L'un des buts de l'invention est donc de remédier à tous ces inconvénients en proposant un dispositif pour simuler la pêche au gros de conception simple permettant à tous les membres de l'équipage d'une pêche au gros de s'entraîner en reproduisant les déplacements du poisson et/ou du bateau.

A cet effet, et conformément à l'invention, il est proposé un dispositif pour simuler la pêche d'un gros poisson au moyen d'une canne à pêche équipée d'un moulinet, ledit dispositif comprenant d'une part un siège dit de combat constitué d'un plateau d'assise monté libre en rotation autour d'un axe vertical s'étendant depuis un socle, de deux accoudoirs s'étendant verticalement depuis les bords longitudinaux du plateau, du repose pied légèrement incliné de haut en bas depuis le bord transversal avant du plateau d'assise, et d'un harnais, et d'autre part un tambour enrouleur entraîné par un moteur muni d'un variateur de vitesse, l'extrémité libre de la ligne de pêche de ladite canne à pêche étant solidaire de l'axe du tambour enrouleur de manière à simuler le déplacement d'un poisson en entraînant en rotation le tambour ; ledit dispositif est remarquable en ce qu'il comprend une unité de commande et au moins un bras horizontal monté libre en rotation autour d'un axe vertical , apte à être entraîné en rotation par des moyens d'entraînement solidaires dudit axe vertical et comportant à son extrémité libre distale, dans sa partie supérieure, le tambour enrouleur et, dans sa partie inférieure, une roulette, ledit tambour enrouleur et les moyens d'entraînement du bras horizontal étant pilotables par ladite unité de commande qui comprend au moins une manette connectée à ladite unité et qui est destinée à piloter le moteur d'entraînement du bras horizontal et/ou le moteur du tambour.

On comprend bien que, contrairement aux dispositifs de l'art antérieur, le dispositif de simulation permet de reproduire les mouvements verticaux et horizontaux d'un poisson ferré au bout de la ligne de pêche.

D'autres avantages et caractéristiques ressortiront mieux de la description qui va suivre de plusieurs variantes d'exécution, données à titre d'exemple non limitatifs, du dispositif pour simuler la pêche d'un gros poisson conforme à l'invention en référence aux dessins sur lesquels :
- la figure 1 est une représentation schématique de côté du dispositif pour simuler la pêche au gros suivant l'invention,
- la figure 2 est une représentation schématique de côté de l'extrémité libre distales du bras horizontal sur lequel est monté le tambour enrouleur du dispositif pour simule la pêche au gros conforme à l'invention,
- la figure 3 est une vue de dessus schématique du dispositif pour simuler la pêche au gros conforme à l'invention
- la figure 4 est une représentation schématique de côté d'une variante d'exécution du dispositif pour simuler la pêche au gros suivant l'invention.

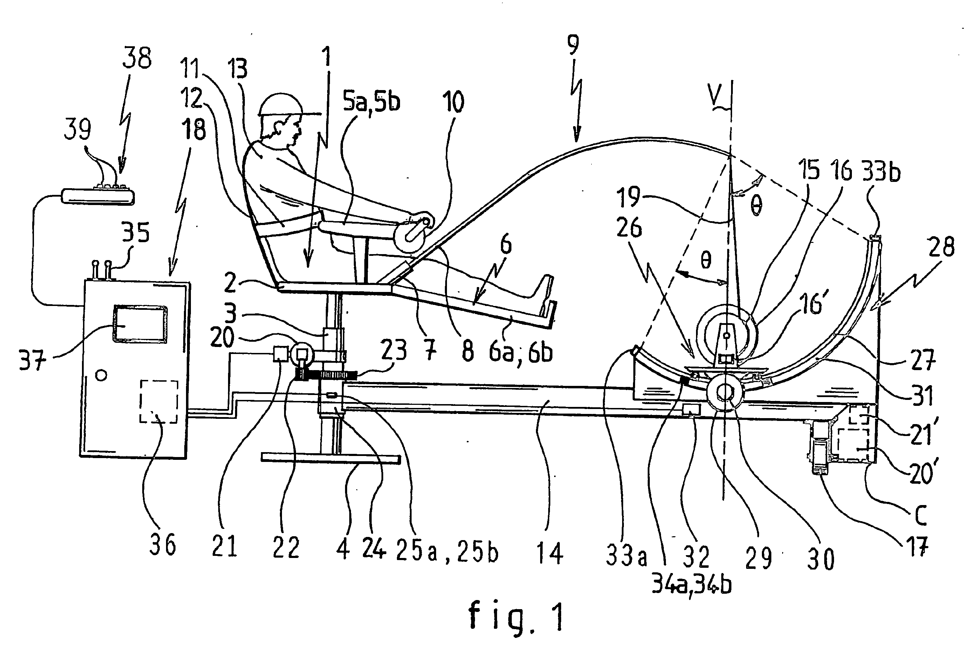

En référence à la figure 1, le dispositif pour simuler la pêche d'un gros poisson suivant l'invention comprend un siège dit de combat 1 comprenant un plateau d'assise horizontal 2 monté libre en rotation autour d'un axe vertical 3 s'étendant depuis un socle 4 posé sur le sol, deux accoudoirs 5a, 5b s'étendant verticalement depuis les bords longitudinaux du plateau d'assise 2 et un repose pieds 6 légèrement incliné de haut en bas depuis le bord transversal avant du plateau d'assise 2. Le siège de combat 1 comprend avantageusement un porte canne constitué d'un tube cylindrique 7, représenté en traits pointillés sur la figure 1, apte à accueillir le talon 8 d'une canne à pêche 9 à moulinet 10 et s'étendant globalement verticalement, légèrement incliné vers l'avant, dans l'entrejambe du plateau d'assise 2.Le dispositif comprend une sangle 11 solidaire d'un harnais 12 porté par un pêcheur 13 qui prend position sur le siège de combat 1, ladite sangle 11 étant solidarisée au moulinet 10 de la canne à pêche 9.

Par ailleurs, le dispositif comprend un bras horizontal 14 monté libre en rotation autour de l'axe vertical 3 du siège de combat 1, apte à être entraîné en rotation par des moyens d'entraînement solidaires dudit axe vertical 3 du siège 1 et comportant à son extrémité libre distale, dans sa partie supérieure, un tambour enrouleur 15 apte à être entraîné en rotation par un moteur d'entraînement 16 monté en série avec un variateur de vitesse 16' et, dans sa partie inférieure, une roulette 17. Ledit moteur d'entraînement 16 du tambour enrouleur 15 et les moyens d'entraînement du bras horizontal 14 à l'extrémité libre distale duquel est solidaire le tambour enrouleur 15 sont connectés à un automate programmable 18 qui les pilote soit automatiquement suivant une ou plusieurs séquences préenregistrées soit manuellement par un opérateur comme il sera détaillé plus loin.

L'extrémité libre de la ligne de pêche 19 de la canne à pêche 9 est solidaire de l'axe du tambour enrouleur 15 de manière à simuler la traction d'un poisson en entraînant en rotation ledit tambour 15. Les moyens d'entraînement 16 du bras horizontal 14 consistent dans un moteur électrique 20 monté en série avec un variateur de vitesse 21 solidaire de l'axe vertical 3 du siège de combat 1 et dont l'axe de transmission s'étendant parallèlement à l'axe vertical 3 du siège 1 comprend à son extrémité libre inférieure un pignon denté 22 en prise avec une roue dentée 23 solidaire d'un manchon 24 enfilé sur l'axe 3 du siège 1, l'axe de rotation de la roue dentée 23 étant coaxial à l'axe 3 du siège 1, et solidaire du bras horizontal 14.

Selon une variante d'exécution du dispositif pour simuler la pêche au gros suivant l'invention, en référence à la figure 1, les moyens d'entraînement du bras horizontal 14 en rotation autour de l'axe vertical 3 du siège de combat 1 peuvent consister, en lieu et place du pignon denté 22 en prise avec la roue dentée 23 solidaire dudit bras horizontal 14, peuvent consister dans un moteur d'entraînement 20' tel qu'un motoréducteur, par exemple, couplé à un variateur de vitesse 21' connectés à l'automate programmable 18 et positionnés dans un carter C solidaire de l'extrémité libre distale du bras horizontal 14, le moteur d'entraînement 20', le variateur de vitesse 21' et le carter C étant représentés en traits pointillés sur la figure 1. Dans cet exemple particulier de réalisation, le moteur d'entraînement 20' est en prise avec l'axe de la roulette 17 afin d'entraîner en rotation le bras horizontal autour de l'axe vertical 3 du siège de combat.

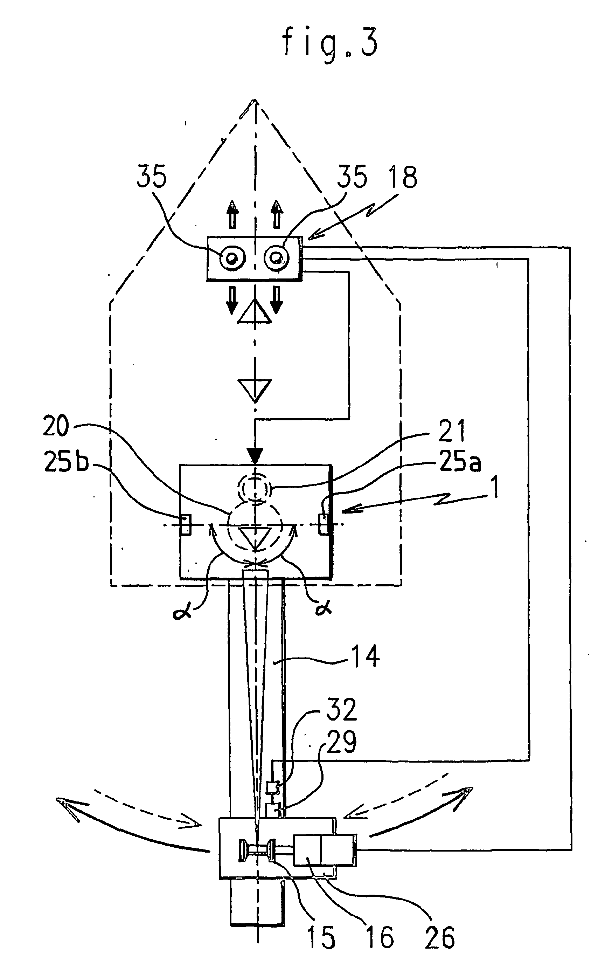

De manière particulièrement avantageuse, en référence aux figures 1 et 3, le dispositif comprend deux capteurs 25a, 25b de fin de course du bras horizontal 14 connectés à l'automate programmable 18 et solidaires du piétement du siège de combat 1, c'est-à-dire solidaire du socle 4 et/ou de l'axe vertical 3 du siège. 1, de telle sorte que le bras horizontal 14 prenne appui sur l'un des capteurs 25a,25b lorsqu'il effectue une rotation d'un angle α de part ou d'autre d'une position de repos représentée en traits pointillés sur la figure 3 qui correspond, de préférence, à la ligne de foi du bateau sur lequel le siège de combat 1 est théoriquement fixé, représenté en traits mixtes sur la figure 3. On entend par « ligne de foi » la droite passant par la proue et l'étrave du bateau séparant le côté tribord du côté babord du bateau et qui est confondu avec l'axe de symétrie de ce dernier. Dans cet exemple non limitatif d'exécution du dispositif pour simuler la pêche au gros suivant l'invention, l'angle a est égal à 90° et correspond à une position du poisson dépassant le bateau par le côté, position dans laquelle la ligne de pêche risque de casser dans la réalité. Ainsi, lorsque le bras horizontal pivote suivant un angle de 90° de part ou d'autre de la position de repos du bras horizontal, ce dernier entre en contact avec l'un des capteurs qui transmet l'information à l'automate programmable 18 qui arrête alors le dispositif.

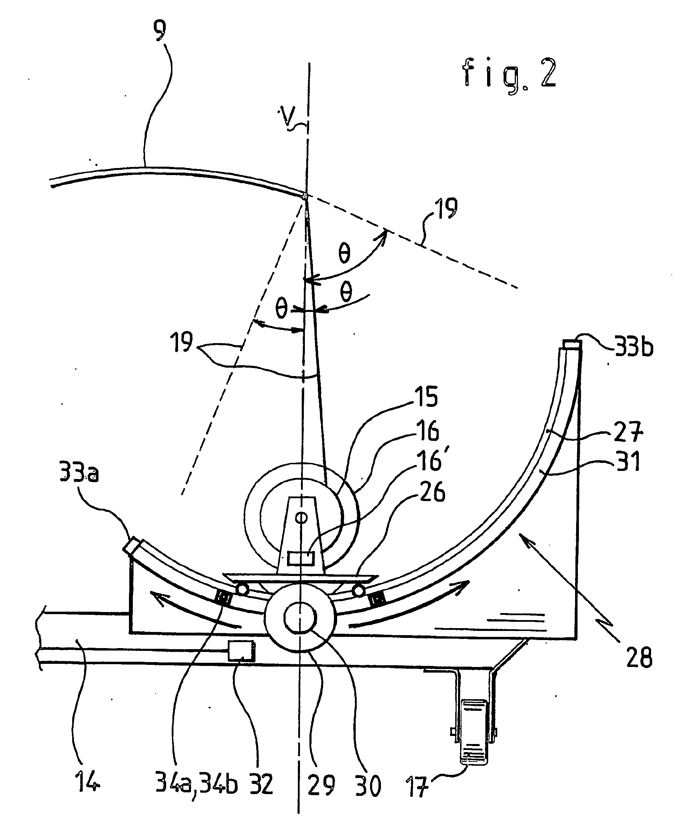

En référence aux figures 1 et 2, le tambour enrouleur 15 est monté sur un chariot 26 apte à coulisser entre des rails 27 d'une rampe courbe 28 dont la concavité est orientée vers le haut, lesdits rails 27 de la rampe 28 étant solidaire de l'extrémité libre distale du bras horizontal 14, dans sa partie supérieure, de telle sorte que l'extrémité distale de la rampe 28 soit plus haute que l'extrémité proximale de ladite rampe 28. Ledit chariot 26 est entraîné le long des rails de la rampe afin de faire varier l'angle θ de la ligne de pêche par rapport à la verticale V par un second moteur d'entraînement 29 piloté par l'automate programmable 18. Le moteur d'entraînement 29 est solidaire du chariot 26 et comprend un pignon denté coopérant avec une chaîne 31 positionnée entre les rails 27 de la rampe 28, un troisième variateur de vitesse 32 étant connecté en série entre l'automate programmable 18 et le moteur d'entraînement 29 du chariot 26. Par ailleurs, la rampe 28 comprend deux capteurs de fin de course 33a,33b du chariot 26 positionnés entre les rails 27 de la rampe 28 à l'extrémité proximale et respectivement à l'extrémité distale de la rampe et deux capteurs intermédiaires 34a,34b positionnés entre les rails 27 dans la partie médiane de la rampe 28 qui transmettent les informations concernant la position verticale du poisson à l'automate programmable 18 afin de faire varier éventuellement les autres paramètres des différents organes du dispositif pilotés par ledit automate 18. Ainsi, lorsque le chariot 26 entre en contact avec le capteur de fin de course 33a positionné à l'extrémité proximale inférieure de la rampe 28, ledit capteur 33a permet d'informer l'automate programmable 18 et à l'équipage que le poisson ferré au bout de la ligne de pêche 19 est passé sous le bateau risquant d'entraîner la rupture de la ligne de pêche 19 de sorte que l'automate programmable 18 arrête la séquence en cours d'exécution. Lorsque le chariot 26 atteint le capteur de fin de course 33b positionné à l'extrémité distale supérieure de la rampe 28, le capteur 33b transmet l'information à l'automate programmable 18 qui arrête l'alimentation du moteur d'entraînement 29 du chariot 26. On observera que les capteurs intermédiaires 34a, 34b permettent à l'automate programmable 18 d'ajuster les commandes aux différents organes du dispositif en fonction des commandes initiales enregistrées dans la séquence en cours d'exécution et des réactions de l'équipage, c'est-à-dire du pêcheur, du « driver » qui est positionné derrière le siège de combat pour le faire éventuellement pivoter et principalement du « skipper » qui pilote le bateau.

Par ailleurs, en référence à la figure 1, le dispositif comprend deux manettes 35 connectées à l'automate programmable 18 et pilotant le second variateur de vitesse 21 monté en série avec le moteur d'entraînement du bras horizontal 14 et/ou le troisième variateur de vitesse 32 monté en série avec le moteur d'entraînement 29 du chariot 26 afin de permettre au « skipper » de l'équipage, c'est-à-dire à celui qui dirige le bateau à l'arrière duquel est théoriquement positionné le siège de combat, de faire pivoter la ligne de foi du bateau en actionnant les deux manettes 35 de manière inversée, c'est-à-dire une manette vers l'avant et l'autre manette vers l'arrière, de faire avancer ou reculer le bateau en actionnant simultanément vers l'avant ou respectivement vers l'arrière lesdites manettes 35. Le déplacement du bateau entraîne immédiatement et automatiquement un ajustement des variateurs de vitesse 32,21 des différents moteurs d'entraînement du chariot 26, du bras horizontal 14 et du tambour enrouleur 15.

Il est bien évident que le dispositif peut ne comprendre qu'une seule manette 35 ou tout autre moyen équivalent tel qu'un potentiomètre, un volant de direction et un levier de marche avant et arrière ou analogue sans sortir du cadre de l'invention.

Ledit automate programmable 18 comprend une mémoire 36, représentée en traits pointillés sur la figure 1, dans laquelle est enregistrée des séquences de simulation de pêche au gros, un écran LCD 37 sur lequel sont affichées des informations concernant par exemple l'état de l'automate. De plus, l'automate 18 comprend un boîtier de commande 38 connecté à l'automate programmable et muni de boutons 39 afin de programmer une nouvelle séquence de simulation qui sera ensuite enregistrée dans la mémoire 36 de l'automate 18 ou de piloter le moteur d'entraînement 20 du bras horizontal 14 et/ou le moteur d'entraînement 29 du chariot 26 et/ou le moteur d'entraînement 16 du tambour enrouleur 15.

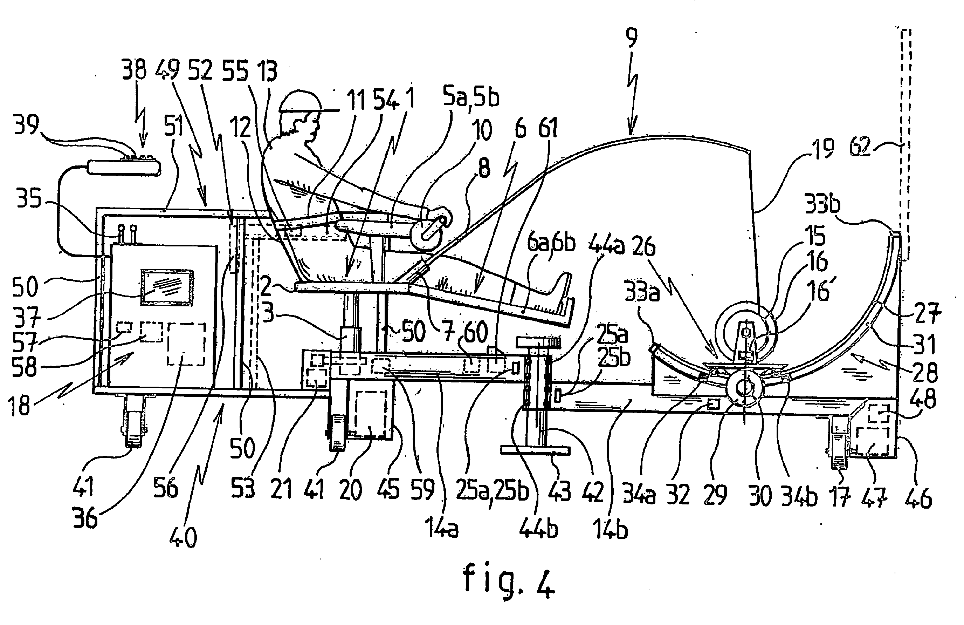

Selon une variante d'exécution du dispositif pour simuler la pêche au gros suivant l'invention, en référence à la figure 4, ce dernier comprend de la même manière que précédemment un siège dit de combat 1 comprenant un plateau d'assise horizontal 2 monté libre en rotation autour d'un axe vertical 3 s'étendant depuis une plate-forme 40 munie de roulettes 41, deux accoudoirs 5a,5b s'étendant verticalement depuis les bords longitudinaux du plateau d'assise 2 et un repose pieds 6 légèrement incliné de haut en bas depuis le bord transversal avant du plateau d'assise 2. Le siège de combat 1 comprend avantageusement un porte canne constitué d'un tube cylindrique 7, représenté en traits pointillés sur la figure 1, apte à accueillir le talon 8 d'une canne à pêche 9 à moulinet 10 et s'étendant globalement verticalement, légèrement incliné vers l'avant, dans l'entrejambe du plateau d'assise 2. Le dispositif comprend une sangle 11 solidaire d'un harnais 12 porté par un pêcheur 13 qui prend position sur le siège de combat 1, ladite sangle 11 étant solidarisée au moulinet 10 de la canne à pêche 9.

Par ailleurs, le dispositif comprend un premier bras horizontal 14a solidaire de la plate-forme 40 et monté libre en rotation autour d'un axe vertical 42 s'étendant depuis une base 43 posée sur le sol et un second bras horizontal 14b monté libre en rotation autour dudit axe vertical 42 et comportant à son extrémité libre distale, dans sa partie supérieure, le tambour enrouleur 15 monté sur le chariot 26 apte à coulisser entre les rails 27 de la rampe courbé 28 dont la concavité est orientée vers le haut et, dans sa partie inférieure, une roulette 17. Les bras horizontaux 14a et 14b sont avantageusement monté libre en rotation sur l'axe vertical 42 avec des roulements à bille 44a et respectivement 44b. La plate-forme 40 comprend sous le siège de combat 1 un carter 45 à l'intérieur duquel est positionné un moteur d'entraînement 20 du type moteur motoréducteur couplé à un variateur de vitesse 21 connecté à l'automate programmable 18 positionné sur la plate-forme 40, le moteur d'entraînement 20 entraînant l'axe d'une roulette 41 de la plate-forme 40 afin de l'entraîner en rotation autour de l'axe vertical 42. De plus, le dispositif comprend à l'extrémité libre distal du second bras horizontal 14b un carter 46 à l'intérieur duquel est positionné un moteur d'entraînement 47 du second bras 14b couplé à un variateur de vitesse 48 connecté à l'automate programmable 18, le moteur d'entraînement 47, tel qu'un motoréducteur par exemple, entraînant l'axe de la roulette 17 positionné à l'extrémité libre distale du second bras horizontal 14b afin de l'entraîner en rotation autour de l'axe vertical 42. On observera qu'en position de repos, les bras horizontaux 14a et 14b sont alignés sur la ligne de foi virtuelle du bateau matérialisé par la plate-forme 40.

De manière particulièrement avantageuse, le dispositif comprend deux capteurs 25a,25b de fin de course du second bras horizontal 14b connectés à l'automate programmable 18. Ces capteurs 25a et 25b sont positionnés sur le second bras horizontal 14b a proximité de l'axe vertical 42 et sont aptes à coopérer avec des cames 25'a,25'b consistant, par exemple, dans des équerres solidaires du premier bras horizontal 14a à proximité dudit axe 42 de telle sorte que les capteurs 25a, 25b prennent appui sur les cames 25'a,25'b lorsque le second bras horizontal 14b effectue une rotation d'un angle α de part ou d'autre de sa position de repos. Ainsi, lorsque le second bras horizontal 14b pivote suivant un angle α de 90°, par exemple, de part ou d'autre de la position de repos du second bras horizontal 14b, l'un des capteurs 25a ou 25b du second bras horizontal 14b entre en contact avec l'une des cames 25'a ou 25'b, le capteur 25a,25b transmettant l'information à l'automate programmable 18 qui arrête alors le dispositif.

Il est bien évident que les cames 25'a,25'b peuvent être positionnées sur le second bras horizontal 14b à proximité de l'axe 42 et les capteurs 25a,25b peuvent être positionnés sur le premier

Par ailleurs, de la même manière que précédemment, le dispositif comprend deux manettes 35 connectées à l'automate programmable 18 qui pilote le variateur de vitesse 21 monté en série avec le moteur d'entraînement 20 du premier bras horizontal 14a afin de permettre au skipper de l'équipage, de faire pivoter la ligne de foi du bateau en actionnant les deux manettes 35 de manière inversée, c'est-à-dire une manette vers l'avant et l'autre manette vers l'arrière, de faire avancer ou reculer le bateau en actionnant simultanément vers l'avant ou respectivement vers l'arrière lesdites manettes 35. Le déplacement du bateau entraîne immédiatement et automatiquement un ajustement des variateurs de vitesse 32,21 et 16' des différents moteurs d'entraînement du chariot 26, de la plate-forme 40, du second bras horizontal 14b et du tambour enrouleur 15, le déplacement du bateau entraînant un changement de position du poisson matérialisé par le tambour enrouleur par rapport audit bateau matérialisé par la plate-forme 40. Ledit automate programmable 18 comprend une mémoire 36 dans laquelle est enregistrée des séquences de simulation de pêche au gros, un écran LCD 37 sur lequel sont affichées des informations concernant par exemple l'état de l'automate et un boîtier de commande 38 connecté à l'automate programmable et muni de boutons 39 afin de programmer une nouvelle séquence de simulation qui sera ensuite enregistrée dans la mémoire 36 de l'automate 18 ou de piloter le moteur d'entraînement 20 du premier bras horizontal 14a et/ou le moteur d'entraînement du second bras horizontal 14b et/ou le moteur d'entraînement 29 du chariot 26 et/ou le moteur d'entraînement 16 du tambour enrouleur 15. ,

Accessoirement, la plate-forme 40 comprend à sa périphérie un garde corps 49 constitué de montants 50 portant une rambarde horizontale 51 afin d'empêcher la chute du « skipper » et/ou du « driver » postés sur la plate-forme 40 lors de l'utilisation du dispositif.

Il va de soi que le siège de combat 1 du dispositif pour simuler la pêche au gros peut être démonté et substitué par un porte canne afin de permettre la simulation d'une pêche debout dite en « stand up » soit en utilisant les boutons 39 du boîtier de commande 38 soit en programmant une nouvelle séquence qui sera enregistrée dans la mémoire 36 de l'automate programmable 18, les manettes de commande 35 du bateau n'étant alors pas utilisées.

Afin de rendre plus confortable la position du pécheur dite en « stand up », en référence à la figure 4, le dispositif comprend avantageusement en lieu et place du siège de combat 1 un appui dit de « stand up » 52 solidaire de la plate forme 40 et constitué d'une part de deux montants 53 portant à son extrémité supérieure d'une part un plateau horizontal 54 muni d'un porte-canne 55 et d'autre part d'un panneau globalement vertical 56 sur lequel prennent appui les cuisses du pécheur en position de « stand up », l'appui de « stand up » 52 étant représenté en traits pointillés sur la figure 4. Le porte-canne 55 consiste en un évidement circulaire pratiqué sur la face supérieure du plateau horizontal 54 de l'appui de « stand up » 52.

De manière particulièrement avantageuse, le dispositif comprend, en référence à la figure 4, un ou plusieurs hauts-parleurs 57 connectés à des moyens d'émission sonore 58 pilotés par l'automate programmable 18 afin de restituer les bruits du moteur du bateau, des vagues, du vent, etc.... inhérents à la pêche au gros en bateau. Afin de reproduire de manière encore plus fidèle l'environnement de la pêche au gros, le dispositif comprend des moyens de diffusion d'odeurs 59, telles que l'odeur de la mer, du poisson, etc...., des moyens de projection d'eau 60 orientés vers le siège de combat 1 et des moyens de ventilation 61 également orientés vers le siège de combat 1, solidaire du bras horizontal 14a, les moyens de ventilation 61 étant positionnés derrière les moyens de projection d'eau 60. Les moyens de projection d'odeurs, de projection d'eau 60 et des moyens de ventilation 61 sont bien évidemment pilotés par l'automate programmable 18.

Il est bien évident que les moyens de projection d'eau 60, les moyens de projection d'odeurs 59, et les moyens de ventilation 61 peuvent être positionnés sur le bras horizontal 14 du dispositif suivant l'invention représenté à la figure 1 sans pour autant sortir du cadre de l'invention. De plus, les hauts-parleurs 57 peuvent être solidaires d'une partie quelconque du dispositif telle que la plate forme 40 par exemple.

De manière à rendre encore plus ludique le dispositif pour simuler la pêche au gros conforme à l'invention, ce dernier comprend avantageusement un écran vidéo 62 solidaire de l'extrémité distale du second bras horizontal 14b au dessus de la rampe courbe 28. Cet écran vidéo 62 permet de projeter des images de séquences correspondant aux actions du pêcheur, lesdites séquences étant par exemple enregistrées dans la mémoire 36 de l'automate programmable 18.

Accessoirement, le dispositif de simulation pour la pêche au gros suivant l'invention peut être monté sur une plate forme montée sur plusieurs vérins hydrauliques ou analogues pilotés par l'automate programmable 18, par exemple, afin de reproduire les mouvements du bateau sur la mer. De plus, le dispositif peut avantageusement être monté sur une remorque afin de faciliter son déplacement. Enfin, il va de soi que l'automate programmable 18 pourra être substitué par toute autre unité de commande équivalente comprenant avantageusement des moyens de programmation telle qu'un ordinateur du type PC muni d'un logiciel adapté, que le dispositif pour simuler la pêche au gros pourra être programmer pour simuler des poissons quelconques tels que des bonites, des carangues ou analogues, et que les exemples que l'on vient de donner ne sont que des illustrations particulières en aucun cas limitatives quant aux domaines d'application de l'invention.

## Revendications

1. - Dispositif pour simuler la pêche d'un gros poisson au moyen d'une canne à pêche (9) équipée d'un moulinet (10), ledit dispositif comprenant d'une part un siège dit de combat (1) constitué d'un plateau d'assise (2) monté libre en rotation autour d'un axe vertical (3) s'étendant depuis un socle (4), de deux accoudoirs (5a,5b) s'étendant verticalement depuis les bords longitudinaux du plateau (2), d'un repose pieds (6) légèrement incliné de haut en bas depuis le bord transversal avant du plateau d'assise (2), et d'un harnais (12), et d'autre part un tambour enrouleur (15) entraîné par un moteur (16) muni d'un variateur de vitesse (16'), l'extrémité libre de la ligne de pêche (19) de ladite canne à pêche étant solidaire de l'axe du tambour enrouleur (15) de manière à simuler le déplacement d'un poisson en entraînant en rotation le tambour (15), **caractérisé en ce qu'**il comprend une unité de commande (18) et au moins un bras horizontal (14,14b) monté libre en rotation autour d'un axe vertical (3,42), apte à être entraîné en rotation par des moyens d'entraînement et comportant à son extrémité libre distale, dans sa partie supérieure, le tambour enrouleur (15) et, dans sa partie inférieure, une roulette (17), ledit tambour enrouleur (15) et les moyens d'entraînement du bras horizontal (14) étant pilotables par ladite unité de commande (18) qui comprend au moins une manette (35) connectée à ladite unité de commande (18) et qui est destinée à piloter le moteur d'entraînement du bras horizontal (14,14b) et/ou le moteur du tambour (15).

2. - Dispositif suivant la revendication précédente **caractérisé en ce que** l'unité de commande consiste dans un automate programmable (18).

3. - Dispositif suivant l'une quelconque des revendications précédentes **caractérisé en ce qu'**il comprend un seul bras horizontal (14) monté libre en rotation autour de l'axe vertical (3) du siège de combat (1).

4. - Dispositif suivant la revendication 3 **caractérisé en ce que** les moyens d'entraînement consistent dans un moteur (20) solidaire de l'axe vertical (3) du siège (1) de combat (1) et dont l'axe de transmission s'étendant parallèlement à l'axe vertical du siège (1) comprend à son extrémité libre inférieure un pignon denté (22) en prise avec une roue dentée (23) solidaire d'un manchon (24) enfilé sur l'axe (3) du siège, l'axe de rotation de la roue dentée (23) étant coaxial à l'axe (3) du siège (1), et solidaire du bras horizontal (14).

5. - Dispositif suivant l'une quelconque des revendications 3 ou 4 **caractérisé en ce qu'**il comprend un variateur de vitesse (21) connecté en série entre l'automate programmable (18) et le moteur d'entraînement (20) du bras horizontal (14).

6. - Dispositif suivant la revendication 3 **caractérisé en ce qu'**il comprend un moteur d'entraînement (20') couplé à un variateur de vitesse (21') connectés à l'automate programmable (18) et solidaires de l'extrémité libre distale du bras horizontal (14), le moteur d'entraînement étant en prise avec l'axe de la roulette (17).

7. - Dispositif suivant la revendication 1 **caractérisé en ce qu'**il comprend d'une part un premier bras horizontal (14a) solidaire d'une plate-forme (40) munie de roulettes (41) sur laquelle est positionnée le siège de combat (1) et l'automate programmable (18), ledit premier bras horizontal (14a) étant monté libre en rotation autour d'un axe vertical (42) s'étendant depuis une base (43) posée sur le sol, et d'autre part, un second bras horizontal (14b) monté libre en rotation autour dudit axe vertical (42) et comportant à son extrémité libre distale, dans sa partie supérieure, le tambour enrouleur (15).

8. - Dispositif suivant la revendication 7 **caractérisé en ce que** les moyens d'entraînement du premier bras horizontal (14a) autour de l'axe vertical (42) consistent dans un moteur d'entraînement (20) couplé à un variateur de vitesse (21) connecté à l'automate programmable (18), le moteur d'entraînement (20) entraînant l'axe d'au moins une roulette (41) de la plate-forme (40).

9. - Dispositif suivant l'une quelconque des revendications 7 ou 8 **caractérisé en ce que** les moyens d'entraînement du second bras horizontal (14b) autour de l'axe vertical (42) consistent dans un moteur d'entraînement (47) couplé à un variateur de vitesse (48) connecté à l'automate programmable (18), le moteur d'entraînement (47) entraînant l'axe de la roulette (17) positionné à l'extrémité libre distale du second bras horizontal (14b).

10. - Dispositif suivant l'une quelconque des revendications 3 ou 4 **caractérisé en ce qu'**il comprend deux capteurs de fin de course (25a,25b) du bras horizontal (14) ou (14b) connectés à l'automate programmable (18) et solidaires du piétement du siège de combat (1) ou de l'axe vertical (42) de telle sorte que le bras horizontal (14) ou (14b) prenne appui sur l'un des capteurs (25a,25b) lorsqu'il effectue une rotation d'un angle α de part ou d'autre d'une position de repos.

11. - Dispositif suivant la revendication 10 **caractérisé en ce que** l'angle α est égal à 90°.

12. - Dispositif suivant l'une quelconque des revendications précédentes **caractérisé en ce que** le tambour enrouleur (15) est monté sur un chariot (26) apte à coulisser entre des rails d'une rampe courbe (28) dont la concavité est orientée vers le haut, lesdits rails (27) de la rampe (28) étant solidaires de l'extrémité libre distale du bras horizontal, dans sa partie supérieure, de telle sorte que l'extrémité distale de la rampe (28) soit plus haute que l'extrémité proximale de ladite rampe (28) et ledit chariot (26) étant entraîné le long des rails (27 de la rampe (28) afin de faire varier l'angle α de la ligne de pêche (19) par rapport à la verticale V par un second moteur d'entraînement (29) piloté par l'automate programmable (18).

13. - Dispositif suivant la revendication 12 **caractérisé en ce que** le moteur d'entraînement (29) est solidaire du chariot (26) et comprend un pignon denté (30) coopérant avec une chaîne (31) positionnée entre les rails (27) de la rampe (28).

14. - Dispositif suivant l'une quelconque des revendications 12 ou 13 **caractérisé en ce qu'**il comprend un troisième variateur de vitesse (32) connecté en série entre l'automate programmable (18) et le moteur d'entraînement (29) du chariot (26).

15. - Dispositif suivant l'une quelconque des revendications 12 à 14 **caractérisé en ce que** la rampe (28) comprend deux capteurs de fin de course (33a, 33b) du chariot (26) positionnés entre les rails (27) de la rampe (28) à l'extrémité proximale et à l'extrémité distale de la rampe (28) et deux capteurs intermédiaires (34a,34b) positionnés entre les rails (27) dans la partie médiane de la rampe (28).

16. - Dispositif suivant l'une quelconque des revendications 2 à 15 **caractérisé en ce qu'**il comprend deux manettes (35) connectées à l'automate programmable (18) et pilotant le variateur de vitesse (21) monté en série avec le moteur d'entraînement (20) du bras horizontal (14) ou (14a) et/ou le variateur de vitesse (48) du moteur d'entraînement (47) du second bras horizontal (14b) et/ou le variateur de vitesse (32) monté en série avec le moteur d'entraînement (29) du chariot (26).

17. - Dispositif suivant l'une quelconque des revendications 2 à 16 **caractérisé en ce que** l'automate programmable (18) comprend une mémoire (36) dans laquelle est enregistrée des séquences de simulation de pêche au gros.

18. - Dispositif suivant l'une quelconque des revendications 2 à 17 **caractérisé en ce qu'**il comprend un boîtier de commande (38) connecté à l'automate programmable (18) et muni de boutons (39) afin de piloter le moteur d'entraînement (20) du bras horizontal (14) et/ou le moteur d'entraînement (29) du chariot (26) et/ou le moteur d'entraînement (16) du tambour enrouleur (15).

19. - Dispositif suivant l'une quelconque des revendications précédentes **caractérisé en ce qu'**il comprend des moyens de projection d'odeurs (59) pilotés par l'unité de commande (18).

20. - Dispositif suivant l'une quelconque des revendications précédentes **caractérisé en ce qu'**il comprend des moyens de projection d'eau (60) orientés vers le siège de combat (1) et pilotés par l'unité de commande (18).

21. - Dispositif suivant l'une quelconque des revendications précédentes **caractérisé en ce qu'**il comprend des moyens de ventilation (61) orientés vers le siège de combat (1) et pilotés par l'unité de commande (18).

22. - Dispositif suivant l'une quelconque des revendications précédentes **caractérisé en ce qu'**il comprend un écran vidéo (62) positionné à l'extrémité distale du bras horizontal (14, 14b).

23. - Dispositif suivant l'une quelconque des revendications précédentes **caractérisé en ce qu'**il est solidaire d'une plate forme montée sur des vérins pilotés par l'unité de commande (18) de manière à reproduire les mouvements d'un bateau ballotté par les vagues.

## Claims

1. A device for simulation of fishing for a large fish by means of a fishing rod (9) fitted with a reel (10), said device comprising a so-called combat seat (1), consisting of a base plate (2) mounted so as to freely rotate around a vertical axle (3) extending from a base (4), two armrests (5a, 5b) extending vertically from the longitudinal edges of the plate (2), a footrest (6) slightly tilted from top to bottom from the front transverse edge of the base plate (2) and a harness (12) on the one hand, and a driving drum (15) driven by a motor (16) provided with a speed variator (16') on the other hand, the free end of the fishing line (19) of said fishing rod being permanently attached to the axle of the winding drum (15) in order to simulate the displacement of a fish by driving the drum (15) into rotation, **characterized in that** it comprises a control unit (18) and at least one horizontal arm (14, 14b) mounted so as to rotate freely around a vertical axle (3, 42), capable of being driven into rotation by driving means and including at its distal free end, in its upper portion, the winding drum (15) and, in its lower portion, a castor wheel (17), said winding drum (15) and the drive means for the horizontal arm (14) being controllable by said control unit (18) which comprises at least one lever (35) connected to said control unit (18) and which is intended to control the drive motor for the horizontal arm (14, 14b) and/or the motor of the drum (15).

2. The device according to the preceding claim, **characterized in that** the control unit consists in a programmable controller (18).

3. The device according to any of the preceding claims, **characterized in that** it comprises a single horizontal arm (14) mounted so as to freely rotate around the vertical axle (3) of the combat seat (1).

4. The device according to claim 3, **characterized in that** the drive means consist in a motor (20) permanently attached to the vertical axle (3) of the combat seat (1) and the transmission axle of which extending parallel to the vertical axle of the seat (1) comprises at its lower free end, a toothed cog (22) engaged with a toothed wheel (23) permanently attached to a sleeve (24) slipped onto the axle (3) of the seat, the axis of rotation of the toothed wheel (23) being coaxial with the axle (3) of the seat (1), and permanently attached to the horizontal arm (14).

5. The device according to any of claims 3 or 4, **characterized in that** it comprises a speed variator (21) connected in series between the programmable controller (18) and the drive motor (20) for the horizontal arm (14).

6. The device according to claim 3, **characterized in that** it comprises a drive motor (20') coupled with a speed variator (21') connected to the programmable controller (18) and permanently attached to the distal free end of the horizontal arm (14), the drive motor being engaged with the axle of the castor wheel (17).

7. The device according to claim 1, **characterized in that** it comprises a first horizontal arm (14a) permanently attached to a platform (40) provided with castor wheels (41) on which the combat seat (1) and the programmable controller (18) are positioned, said first horizontal arm (14a) being mounted so as to freely rotate around a vertical axle (42) extending from a base (43) laid on the ground on the one hand, and a second horizontal arm (14b) mounted so as to freely rotate around said vertical axle (42) and including at its distal free end, in its upper portion, the winding drum (15) on the other hand.

8. The device according to claim 7, **characterized in that** the drive means for the first horizontal arm (14a) around the vertical axle (42) consist in a drive motor (20) coupled with a speed variator (21) connected to the programmable controller (18), the drive motor (20) driving the axle of at least one castor wheel (41) of the platform (40).

9. The device according to any of claims 7 or 8, **characterized in that** the means for driving the second horizontal arm (14b) around the vertical axle (42) consist in a drive motor (47) coupled with a speed variator (48) connected to the programmable controller (18), the drive motor (47) driving the axle of the castor wheel (17) positioned at the distal free end of the second horizontal arm (14b).

10. The device according to any of claims 3 or 4, **characterized in that** it comprises two sensors for the end of travel (25a, 25b) of the horizontal arm (14) or (14b) connected to the programmable controller (18) and permanently attached to the base of the combat seat (1) or of the vertical axle (42) so that the horizontal arm (14) or (14b) rests on one of the sensors (25a, 25b) when it performs a rotation of angle α on either side of a rest position.

11. The device according to claim 10, **characterized in that** the angle α is equal to 90°.

12. The device according to any of the preceding claims, **characterized in that** the winding drum (15) is mounted on a carriage (26) capable of sliding between the rails of a curved ramp (28), the concavity of which is turned upwards, said rails (27) of the ramp (28) being permanently attached to the distal free end of the horizontal arm, in its upper portion, so that the distal end of the ramp (28) is higher than the proximal end of said ramp (28) and said carriage (26) being driven along the rails (27) of the ramp (28) in order to vary the angle α of the fishing line (19) relatively to the vertical V by a second drive motor (29) controlled by the programmable controller (18).

13. The device according to claim 12, **characterized in that** the drive motor (29) is permanently attached to the carriage (26) and comprises a toothed cog (30) cooperating with a chain (31) positioned between the rails (27) of the ramp (28).

14. The device according to any of claims 12 or 13, **characterized in that** it comprises a third speed variator (32) connected in series between the programmable controller (18) and the drive motor (29) for the carriage (26).

15. The device according to any of claims 12 to 14, **characterized in that** the ramp (28) comprises two sensors for the end of travel (33a, 33b) of the carriage (26), positioned between the rails (27) of the ramp (28) at the proximal end, and at the distal end of the ramp (28) and two intermediate sensors (34a, 34b) positioned between the rails (27) in the middle portion of the ramp (28).

16. The device according to any of claims 2 to 15, **characterized in that** it comprises two levers (35) connected to the programmable controller (18) and controlling the speed variator (21) mounted in series with the drive motor (20) for the horizontal arm (14) or (14a) and/or the speed variator (48) of the drive motor (47) for the second horizontal arm (14b) and/or the speed variator (32) mounted in series with the drive motor (29) for the carriage (26).

17. The device according to any of claims 2 to 16, **characterized in that** the programmable controller (18) comprises a memory (36) in which sequences of simulation of big-game fishing are recorded.

18. The device according to any of claims 2 to 17, **characterized in that** it comprises a control box (38) connected to the programmable controller (18) and provided with buttons (39) in order to control the drive motor (20) for the horizontal arm (14) and/or the drive motor (29) for the carriage (26) and/or the drive motor (16) for the winding drum (15).

19. The device according to any of the preceding claims, **characterized in that** it comprises means for projecting odours (59) controlled by the control unit (18).

20. The device according to any of the preceding claims, **characterized in that** it comprises means for projecting water (60) turned towards the combat seat (1) and controlled by the control unit (18).

21. The device according to any of the preceding claims, **characterized in that** it comprises ventilation means (61) turned towards the combat seat (1) and controlled by the control unit (18).

22. The device according to any of the preceding claims, **characterized in that** it comprises a video screen (62) positioned at the distal end of the horizontal arm (14, 14b).

23. The device according to any of the preceding claims, **characterized in that** it is permanently attached to a platform mounted on cylinders controlled by the control unit (18) so as to reproduce the movements of a boat tossed about by the waves.

## Patentansprüche

1. Vorrichtung zur Fischfangsimulation eines großen Fisches mittels einer Angel (9), die mit einem Strömungsmesser (10) ausgestattet ist, wobei diese Vorrichtung einerseits einen so genannten Wettkampfsitz (1), der aus einer Sitzplatte (2) gebildet ist, die frei drehend um eine von einem Sockel (4) ausgehende vertikale Achse (3) montiert wird, zwei vertikal von den Längsrändern der Platte (2) ausgehende Armstützen (5a, 5b), eine ab dem vorderen Querrand der Sitzplatte (2) leicht von oben nach unten geneigten Fußstütze (6) und einen Haltegurt (12) umfasst und andrerseits eine durch einen Motor (16), der mit einem Geschwindigkeitswandler (16') ausgestattet ist, angetriebene Drehhaspel (15) aufweist, wobei das freie Ende der Angelschnur (19) dieser Angel derart einstückig mit der Drehhaspelachse (15) ausgebildet wird, dass die Bewegung eines Fischs simuliert wird, indem die Haspel (15) im Umtrieb mitgenommen wird, **dadurch gekennzeichnet, dass** sie eine Steuerungseinheit (18) und zumindest einen horizontalen Arm (14, 14b) aufweist, der um eine vertikale Achse (3, 42) frei drehend montiert und geeignet ist, durch Antriebsmittel im Umtrieb mitgenommen zu werden, wobei dieser Arm an seinem distalen freien Ende im Oberteil die Drehhaspel (15) und im Unterteil eine Rolle (17) aufnimmt und die Drehhaspel (15) sowie die Antriebsmittel des horizontalen Arms (14) über diese Steuerungseinheit (18) steuerbar sind, die zumindest einen mit der Steuerungseinheit (18) verbundenen Hebel (35) aufweist und zur Steuerung des Antriebsmotors des horizontalen Arms (14, 14b) und/oder des Motors der Haspel (15) bestimmt ist.

2. Vorrichtung nach dem vorstehenden Anspruch, **dadurch gekennzeichnet, dass** die Steuerungseinheit aus einem programmierbaren Automat (18) gebildet wird.

3. Vorrichtung nach einem der vorstehenden Ansprüche, **dadurch gekennzeichnet, dass** sie einen einzigen horizontalen Arm (14) aufweist, der um die vertikale Achse (3) des Wettkampsitzes (1) frei drehend montiert ist.

4. Vorrichtung nach Anspruch 3, **dadurch gekennzeichnet, dass** die Antriebsmittel aus einem Motor (20) bestehen, der einstückig mit der vertikalen Achse (3) des Wettkampfsitzes (1) ausgebildet wird und dessen Übertragungsachse parallel zur vertikalen Achse des Sitzes (1) verläuft und an ihrem unteren freien Ende einen Zahntrieb (22) aufweist, der auf ein Zahnrad (23) greift, das einstückig mit einer auf die Achse (3) des Sitzes (1) aufgesteckten Muffe (24) ausgebildet wird, wobei die Drehachse des Zahnrads (23) koaxial zur Achse (3) des Sitzes (1) verläuft, und einstückig mit dem horizontalen Arm (14) ausgebildet wird.

5. Vorrichtung nach einem der Ansprüche 3 oder 4, **dadurch gekennzeichnet, dass** sie einen Geschwindigkeitswandler (21) umfasst, der in Reihe zwischen dem programmierbaren Automat (18) und dem Antriebsmotor (20) des horizontalen Arms (14) geschaltet ist.

6. Vorrichtung nach Anspruch 3, **dadurch gekennzeichnet, dass** sie einen Antriebsmotor (20') umfasst, der mit einem Geschwindigkeitswandler (21') gekoppelt ist, welcher mit dem programmierbaren Automat (18) verbunden ist und einstückig mit dem distalen freien Ende des horizontalen Arms (14) ausgebildet wird, wobei der Antriebsmotors auf die Achse der Rolle (17) greift.

7. Vorrichtung nach Anspruch 1, **dadurch gekennzeichnet, dass** sie einerseits einen ersten horizontalen Arm (14a), der einstückig mit einer mit Rollen (41) ausgestatteten Plattform (40) ausgebildet wird, auf der der Wettkampfsitz (1) und der programmierbare Automat (18) angeordnet sind, wobei der erste horizontale Arm (14a) um eine vertikale Achse (42) frei drehend angeordnet wird, die sich von einer bodenseitig aufgestellten Basis (43) erstreckt, und andrerseits einen zweiten horizontalen Arm (14b), der frei drehend um diese vertikale Achse (42) montiert ist und an seinem distalen freien Ende im Oberteil die Drehhaspel (15) aufnimmt, umfasst.

8. Vorrichtung nach Anspruch 7, **dadurch gekennzeichnet, dass** die Antriebsmittel des ersten horizontalen Arms (14a) um die vertikale Achse (42) aus einem Antriebsmotor (20) bestehen, der mit einem Geschwindigkeitswandler (21) gekoppelt ist, welcher mit dem programmierbaren Automat (18) verbunden ist, wobei der Antriebsmotor (20) die Achse von zumindest einer Rolle (41) der Plattform (40) antreibt.

9. Vorrichtung nach einem der Ansprüche 7 oder 8, **dadurch gekennzeichnet, dass** die Antriebsmittel des zweiten horizontalen Arms (14b) um die vertikale Achse (42) aus einem Antriebsmotor (47) bestehen, der mit einem an den programmierbaren Automaten (18) angeschlossenen Geschwindigkeitswandler (48) gekoppelt ist, wobei der Antriebsmotor (47) die Achse der Rolle (17) antreibt, die am distalen freien Ende des zweiten horizontalen Arms (14b) angeordnet ist.

10. Vorrichtung nach einem der Ansprüche 3 oder 4, **dadurch gekennzeichnet, dass** sie zwei Endmessfühler (25a, 25b) des horizontalen Arms (14) oder (14b) umfasst, die mit dem programmierbaren Automat (18) verbunden sind und einstückig derart mit den Füßen des Wettkampfsitzes (1) oder der vertikalen Achse (42) ausgebildet sind, dass der horizontale Arm (14) oder (14b) auf einem der Messfühler (25a, 25b) aufliegt, wenn er eine Drehung um einen Winkel α beidseitig von einer Ruhestellung ausführt.

11. Vorrichtung nach Anspruch 10, **dadurch gekennzeichnet, dass** der Winkel α gleich 90° ist.

12. Vorrichtung nach einem der vorstehenden Ansprüche, **dadurch gekennzeichnet, dass** die Drehhaspel (15) auf einen Wagen (26) montiert ist, der geeignet ist, zwischen Schienen einer Krümmungsrampe (28) zu gleiten, deren Krümmung nach oben orientiert ist, wobei diese Schienen (27) der Rampe (28) derart einstückig mit dem distalen freien Ende des horizontalen Arms auf Ebene seines Oberteils ausgebildet sind, dass das distale Ende der Rampe (28) höher als das proximale Ende der Rampe (28) ist und der Wagen (26) entlang den Schienen (27) der Rampe (28) mitgenommen wird, um den Winkel α der Angelschnur (19) im Verhältnis zur Vertikalen V über einen zweiten Antriebsmotor (29) variieren zu lassen, der vom programmieren Automat (18) gesteuert wird.

13. Vorrichtung nach Anspruch 12, **dadurch gekennzeichnet, dass** der Antriebsmotor (29) einstückig mit dem Wagen (26) ausgebildet ist und einen Zahntrieb (30) aufweist, der mit einer zwischen den Schienen (27) der Rampe (28) angeordneten Kette (31) wirkt.

14. Vorrichtung nach einem der Ansprüche 12 oder 13, **dadurch gekennzeichnet, dass** sie einen dritten Geschwindigkeitswandler (32) umfasst, der in Reihe zwischen den programmierbaren Automat (18) und den Antriebsmotor (29) des Wagens (26) geschaltet ist.

15. Vorrichtung nach einem der Ansprüche 12 bis 14, **dadurch gekennzeichnet, dass** die Rampe (28) zwei Endmessfühler (33a, 33b) des Wagens (26), die zwischen den Schienen (27) der Rampe (28) am proximalen und am distalen Ende der Rampe (28) angeordnet sind, und zwei Zwischenmessfühler (34a, 34b), die zwischen den Schienen (27) im Mittelteil der Rampe (28) angeordnet sind, aufweist.

16. Vorrichtung nach einem der Ansprüche 2 bis 15, **dadurch gekennzeichnet, dass** sie zwei Hebel (35) umfasst, die am programmierbaren Automaten (18) angeschlossen sind und den Geschwindigkeitswandler (21), der in Reihe mit dem Antriebsmotor (20) des horizontalen Arms (14) oder (14a) montiert ist, und/oder dem Geschwindigkeitswandler (48) des Antriebsmotors (47) des zweiten horizontalen Arms (14b) und/oder den Geschwindigkeitswandler (32), der in Reihe mit dem Antriebsmotor (29) des Wagens (26) montiert ist, steuern.

17. Vorrichtung nach einem der Ansprüche 2 bis 16, **dadurch gekennzeichnet, dass** der programmierbare Automat (18) einen Speicher (36) umfasst, in dem Simulationssequenzen des Großfischens aufgezeichnet sind.

18. Vorrichtung nach einem der Ansprüche 2 bis 17, **dadurch gekennzeichnet, dass** sie ein Steuerungsgehäuse (38) umfasst, das an den programmierbaren Automaten (18) angeschlossen und mit Tasten (39) versehen ist, um den Antriebsmotor (20) des horizontalen Arms (14) und/oder den Antriebsmotor (29) des Wagens (26) und/oder den Antriebsmotors (16) der Drehhaspel (15) zu steuern.

19. Vorrichtung nach einem der vorstehenden Ansprüche, **dadurch gekennzeichnet, dass** sie Geruchsprojektionsmittel (59) umfasst, die von der Steuerungseinheit (18) gesteuert werden.

20. Vorrichtung nach einem der vorstehenden Ansprüche, **dadurch gekennzeichnet, dass** sie Wasserprojektionsmittel (60) umfasst, die zum Wettkampfsitz (1) orientiert sind und durch die Steuerungseinheit (18) gesteuert werden.

21. Vorrichtung nach einem der vorstehenden Ansprüche, **dadurch gekennzeichnet, dass** sie Belüftungsmittel (61) umfasst, die zum Wettkampfsitz (1) orientiert sind und durch die Steuerungseinheit (18) gesteuert werden.

22. Vorrichtung nach einem der vorstehenden Ansprüche, **dadurch gekennzeichnet, dass** sie einen Videobildschirm (62) umfasst, der am distalen Ende des horizontalen Arms (14, 14b) angeordnet ist.

23. Vorrichtung nach einem der vorstehenden Ansprüche, **dadurch gekennzeichnet, dass** sie einstückig mit einer Plattform ausgebildet wird, die auf durch die Steuerungseinheit (18) gesteuerten Zylindern derart montiert wird, dass die Bewegungen eines Schiffs nachgeahmt werden, das auf den Wellen schaukelt.
